# EUROPÄISCHE PATENTANMELDUNG

(11) **EP 2 362 126 A1**
(43) Veröffentlichungstag der Anmeldung: **31.08.2011**
(21) Anmeldenummer: 11450026.7
(22) Anmeldetag: 22.02.2011
(51) Int. Cl.: F16K 31/26

(54) **Schwimmergesteuertes Ventil**

(30) Priorität: 22.02.2010 AT 2652010
(71) Anmelder: Tiba Austria GmbH, 8403 Lebring (AT)
(72) Erfinder: Ofner, Hubert, 8413 Kleinfeiting (AT)
(74) Vertreter: Gibler & Poth Patentanwälte OG

(57) **Zusammenfassung**

Bei einem schwimmergesteuerten Ventil (1) für Leichtflüssigkeitsabscheider, wobei das Ventil (1) ein Ventilgehäuse (2) mit einem Zulauf (21) und einem - in Betriebslage des Ventils (1) - im Bereich einer Unterseite (22) des Ventilgehäuses (2) angeordneten Auslauf (23) aufweist, wobei ein Schwimmer (3) über eine Auslösemechanik (4) mit einem Ventilteller (5) zusammenwirkt, wobei bei einer vorgebbaren Stellung des Schwimmers (3) die Auslösemechanik (4) den in einer, einen Flüssigkeitsaustritt aus dem Auslauf (23) ermöglichenden, Offenstellung (51) arretierten Ventilteller (5) zur Bewegung in eine, einen Flüssigkeitsaustritt aus dem Auslauf (23) verhindernde, Geschlossenstellung (52) des Ventiltellers (5) freigibt, wird zur Verlängerung der Wartungsintervalle und zur Vereinfachung der Wartung vorgeschlagen, dass die Auslösemechanik (4) - in Betriebslage des Ventils (1) - im Bereich einer Oberseite (24) des Ventilgehäuses (2) angeordnet ist.

## Beschreibung

Die Erfindung betrifft ein schwimmergesteuertes Ventil für Leichtflüssigkeitsabscheider gemäß dem Oberbegriff des Patentanspruches 1.

Das schwimmergesteuerte Ventil wird für die Unterbrechung des Zulaufes eines Flüssigkeitsgemisches zu einem Leichtflüssigkeitsabscheider, insbesondere einem Ölabscheider, verwendet um den unerwünschten Austrag einer bereits im Leichtflüssigkeitsabscheider gespeicherten Leichtflüssigkeit zu verhindern. Das Flüssigkeitsgemisch umfasst wenigstens zwei Flüssigkeiten unterschiedlicher Dichte, womit die dichtere der Flüssigkeiten eine Schwerflüssigkeit, insbesondere Wasser, ist und die weniger dichte der Flüssigkeiten die Leichtflüssigkeit, insbesondere Öl, beispielsweise Mineralöl, ist. Im Leichtflüssigkeitsabscheider trennt sich das Flüssigkeitsgemisch - schwerkraftbewirkt durch die unterschiedlichen Dichten der unterschiedlichen Flüssigkeiten - auf mehrere übereinanderliegende Schichten auf, wobei die Leichtflüssigkeit oberhalb der Schwerflüssigkeit angeordnet ist.

Im Betrieb des Leichtflüssigkeitsabscheiders ist das Zulaufen des Flüssigkeitsgemisches derart geregelt, insbesondere mittels einer Zulaufregelung, dass die Oberfläche des Flüssigkeitsgemisches, also die Oberfläche der Leichtflüssigkeit, im Wesentlichen im Bereich einer konstanten Füllhöhe des Leichtflüssigkeitsabscheiders angeordnet ist. Es verändert sich jedoch die Höhenlage einer Trennschicht zwischen der Leichtflüssigkeit und der Schwerflüssigkeit im Leichtflüssigkeitsabscheider in Abhängigkeit des Anteils an Leichtflüssigkeit im Flüssigkeitsgemisch. Je höher der Anteil der Leichtflüssigkeit im Flüssigkeitsgemisch ist, desto stärker ist die Schichtdicke der Leichtflüssigkeit im Leichtflüssigkeitsabscheider, desto niedriger liegt die Trennschicht. Bei der konstanten Lage der Oberfläche des Flüssigkeitsgemischs auf Höhe der Füllhöhe des Leichtflüssigkeitsabscheiders sinkt somit die Trennschicht im Leichtflüssigkeitsabscheider ab, womit der Schwimmer des Ventils, welcher eine geeignete Dichte aufweist, ebenfalls sinkt.

Bei Überschreitung einer vorgegebenen Schichtstärke der Leichtflüssigkeit löst das schwimmergesteuerte Ventil - bewirkt durch den sinkenden Schwimmer - aus, womit ein Ventilteller freigegeben wird, sodass der Ventilteller in einer Geschlossenstellung des Ventiltellers bewegt wird, um das Ventil derart zu schließen, sodass ein weiteres Zulaufen des Flüssigkeitsgemischs in den Leichtflüssigkeitsabscheider unterbunden ist. Die vorgegebene maximale Schichtstärke der Leichtflüssigkeit ist derart gewählt um den unerwünschten Austrag einer bereits im Leichtflüssigkeitsabscheider gespeicherten Leichtflüssigkeit zu verhindern. Beispielsweise kann die maximale Schichtstärke der Leichtflüssigkeit 20cm betragen. Diese maximale Schichtstärke der Leichtflüssigkeit definiert somit eine Auslöselinie des Leichtflüssigkeitsabscheiders, bei welcher Auslöselinie das Ventil auslöst, sobald der Schwimmer des Ventils unter die Auslöselinie absinkt.

Sobald das schwimmergesteuerte Ventil ausgelöst hat, ist weiteres Zulaufen des Flüssigkeitsgemischs in den Leichtflüssigkeitsabscheider unterbunden. Dann kann die sich im Leichtflüssigkeitsabscheider oben angesammelte, also gespeicherte, Leichtflüssigkeit entfernt, insbesondere abgeschöpft, werden, womit die Füllhöhe des Flüssigkeitsgemischs im Leichtflüssigkeitsabscheider sinkt und womit der Anteil der Leichtflüssigkeit im Flüssigkeitsgemisch sinkt. Sobald eine ausreichende Menge Leichtflüssigkeit entfernt wurde kann Leichtflüssigkeitsabscheider wiederum bis Füllhöhe des Leichtflüssigkeitsabscheiders befüllt werden, beispielsweise indem des Ventil manuell geöffnet und im geöffneten Zustand gehalten wird oder indem über einen anderen Zulauf, beispielsweise einen Schlauch, Flüssigkeit in den Leichtflüssigkeitsabscheider gefüllt wird. Nach Erreichung der Füllhöhe kann der Ventilteller wiederum in dessen Offenstellung arretiert werden, sodass die arretierte geöffnete Stellung des schwimmergesteuerten Ventils wiederhergestellt ist und das Ventil vorbereitet ist um bei der nächsten Überschreitung der vorgegebenen Schichtstärke wieder auszulösen.

Schwimmergesteuerte Ventile für den Leichtflüssigkeitsabscheider, welches Ventil einen Ventilteller umfasst, sind bekannt. Diese sind jedoch aufwendig in der Wartung und ermöglich keine direkte visuelle Kontrolle, ob das schwimmergesteuerte Ventil ausgelöst hat oder nicht.

Aufgabe der Erfindung ist es daher ein schwimmergesteuertes Ventil der eingangs genannten Art anzugeben, welches besonders einfach in der Wartung ist und welches eine unmittelbare Sichtkontrolle ermöglicht, ob das Ventil ausgelöst hat.

Erfindungsgemäß wird dies durch die Merkmale des Patentanspruches 1 erreicht.

Durch die Anordnung der Auslösemechanik im Bereich der Oberseite des Ventilgehäuses ergibt sich der Vorteil, dass die Auslösemechanik immer oberhalb der Füllhöhe des Flüssigkeitsgemischs im Leichtflüssigkeitsabscheider angeordnet ist. Vorteilhaft dabei ist, dass die Auslösemechanik derart im Wesentlichen nicht mit dem Flüssigkeitsgemisch in Kontakt kommt und somit weniger schnell verschmutzt. Dadurch kann einerseits das Wartungsintervall der Auslösemechanik verlängert werden und andererseits gestaltet sich die Wartung der Auslösemechanik üblicherweise einfacher, beispielsweise ist dabei die Auslösemechanik üblicherweise leichter zugänglich, womit das schwimmergesteuerte Ventil besonders einfach in der Wartung ist und der Wartungsaufwand der schwimmergesteuerten Ventils besonders gering ist.

Durch die Anordnung der Auslösemechanik im Bereich der Oberseite des Ventilgehäuses ergibt sich weiters der Vorteil, dass an der Stellung der Auslösemechanik unmittelbar erkannt werden kann, ob das Ventil ausgelöst hat oder nicht. Dies ermöglicht die unmittelbare Sichtkontrolle, ob das Ventil ausgelöst hat.

Die Erfindung betrifft weiters einen Leichtflüssigkeitsabscheider mit dem schwimmergesteuerten Ventil.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich eine bevorzugte Ausführungsform beispielhaft dargestellt ist, näher beschrieben.

Dabei zeigt:
Fig. 1 schematisch geschnitten in Seitenansicht ein schwimmergesteuertes Ventil einer bevorzugten ersten Ausführungsform für einen Leichtflüssigkeitsabscheider, wobei das schwimmergesteuerte Ventil offen und in Betriebslage angeordnet dargestellt ist;
Fig. 2 schematisch geschnitten in Seitenansicht das schwimmergesteuerte Ventil der Fig. 1, wobei das schwimmergesteuerte Ventil geschlossen und in Betriebslage angeordnet dargestellt ist;
Fig. 3 schematisch in Frontansicht das schwimmergesteuerte Ventil der Fig. 1, wobei das schwimmergesteuerte Ventil in einer Offenstellung und in Betriebslage angeordnet dargestellt ist, wobei der Schwimmer des schwimmergesteuerten Ventils nicht dargestellt ist, und wobei ein Halterahmen für das schwimmergesteuerte Ventil dargestellt ist; und
Fig. 4 schematisch in Rückansicht das schwimmergesteuerte Ventil der Fig. 1, wobei das schwimmergesteuerte Ventil in einer Offenstellung und in Betriebslage angeordnet dargestellt ist, wobei der Schwimmer des schwimmergesteuerten Ventils nicht dargestellt ist, und wobei ein Halterahmen für das schwimmergesteuerte Ventil dargestellt ist.

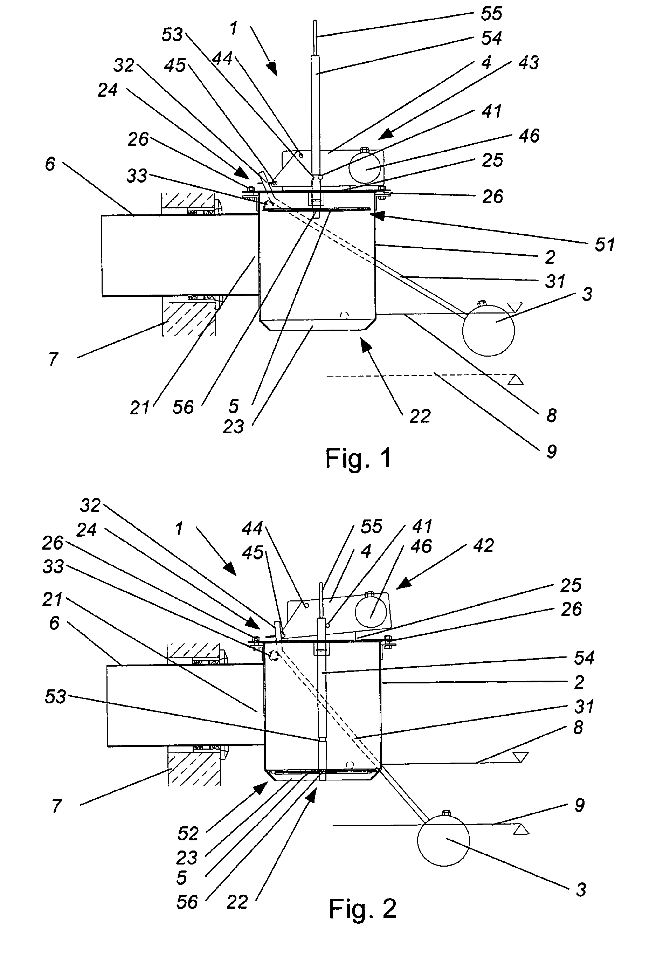

Die Fig. 1 bis 4 zeigen eine bevorzugte erste Ausführungsform eines schwimmergesteuerten Ventils 1 für Leichtflüssigkeitsabscheider, wobei das Ventil 1 ein Ventilgehäuse 2 mit einem Zulauf 21 und einem - in Betriebslage des Ventils 1 - im Bereich einer Unterseite 22 des Ventilgehäuses 2 angeordneten Auslauf 23 aufweist, wobei ein Schwimmer 3 über eine Auslösemechanik 4 mit einem Ventilteller 5 zusammenwirkt, wobei bei einer vorgebbaren Stellung des Schwimmers 3 die Auslösemechanik 4 den in einer, einen Flüssigkeitsaustritt aus dem Auslauf 23 ermöglichenden, Offenstellung 51 arretierten Ventilteller 5 zur Bewegung in eine, einen Flüssigkeitsaustritt aus dem Auslauf 23 verhindernde, Geschlossenstellung 52 des Ventiltellers 5 freigibt, wobei zur Verlängerung der Wartungsintervalle und zur Vereinfachung der Wartung vorgesehen ist, dass die Auslösemechanik 4 - in Betriebslage des Ventils 1 - im Bereich einer Oberseite 24 des Ventilgehäuses 2 angeordnet ist.

Durch die Anordnung der Auslösemechanik 4 im Bereich der Oberseite 24 des Ventilgehäuses 2 ergibt sich der Vorteil, dass die Auslösemechanik 4 immer oberhalb der Füllhöhe 8 des Flüssigkeitsgemischs im Leichtflüssigkeitsabscheider angeordnet ist. Vorteilhaft dabei ist, dass die Auslösemechanik 4 derart im Wesentlichen nicht mit dem Flüssigkeitsgemisch in Kontakt kommt und somit weniger schnell verschmutzt. Dadurch kann einerseits das Wartungsintervall der Auslösemechanik 4 verlängert werden und andererseits gestaltet sich die Wartung der Auslösemechanik 4 üblicherweise einfacher. Insbesondere ist die Auslösemechanik 4 dabei leichter zugänglich, womit das schwimmergesteuerte Ventil 1 besonders einfach in der Wartung ist und der Wartungsaufwand der schwimmergesteuerten Ventils 1 besonders gering ist.

Durch die Anordnung der Auslösemechanik 4 im Bereich der Oberseite 24 des Ventilgehäuses 2 ergibt sich weiters der Vorteil, dass an der Stellung der Auslösemechanik 4 unmittelbar erkannt werden kann, ob das Ventil 1 ausgelöst hat oder nicht. Dies ermöglicht die unmittelbare Sichtkontrolle, ob das Ventil 1 ausgelöst hat, also geschlossen ist.

Das schwimmergesteuerte Ventil 1 ist zur Anordnung im Leichtflüssigkeitsabscheider vorgesehen. Insbesondere kann das schwimmergesteuerte Ventil 1 vom Leichtflüssigkeitsabscheider umfasst sein.

Das schwimmergesteuerte Ventil 1 umfasst den Schwimmer 3, welcher ausgebildet ist, um auf einer Flüssigkeit aufzuschwimmen, die eine höhere Dichte als der Schwimmer 3 aufweist, und um in einer Flüssigkeit unterzugehen, die eine niedrigere Dichte als der Schwimmer aufweist. Die Flüssigkeit, die eine höhere Dichte als der Schwimmer 3 aufweist, wird im Weiteren als Schwerflüssigkeit bezeichnet. Die Schwerflüssigkeit kann insbesondere eine erste Emulsion und/oder eine erste Suspension sein. Die Schwerflüssigkeit kann insbesondere Wasser, bevorzugt eine Wasseremulsion und/oder Wassersuspension, sein. Die Flüssigkeit, die eine niedrigere Dichte als der Schwimmer 3 aufweist, wird im Weiteren als Leichtflüssigkeit bezeichnet. Die Leichtflüssigkeit kann insbesondere eine zweite Emulsion und/oder eine zweite Suspension sein. Die Leichtflüssigkeit kann insbesondere Öl, beispielsweise Mineralöl, sein. Die Leichtflüssigkeit kann insbesondere eine Dichte aufweisen, die in etwa 10% bis 50% geringer als die Dichte der Schwerflüssigkeit ist. Die Dichte des Schwimmers 3 liegt zwischen der Dichte der Leichtflüssigkeit und der Schwerflüssigkeit.

Im Betrieb des Leichtflüssigkeitsabscheiders schwimmt der Schwimmer 3 in einem Flüssigkeitsgemisch der Leichtflüssigkeit und der Schwerflüssigkeit. Im Flüssigkeitsgemisch vermischen sich die Leichtflüssigkeit und die Schwerflüssigkeit nur bedingt bis schlecht, sodass die Leichtflüssigkeit und die Schwerflüssigkeit im Flüssigkeitsgemisch nicht als Emulsion, sondern im Wesentlichen übereinander geschichtet vorliegen. Schwerkraftbedingt ordnet sich die Leichtflüssigkeit im Wesentlichen oberhalb der Schwerflüssigkeit an, womit der Schwimmer 3 im Flüssigkeitsgemisch soweit absinkt, bis die höhere Dichte der Schwerflüssigkeit genug Auftrieb bewirkt, sodass der Schwimmer 3 schwimmt. Im Bereich des Übergangs von der Leichtflüssigkeit zur Schwerflüssigkeit kann eine mehr oder weniger dicke Trennschicht im Flüssigkeitsgemisch ausgebildet sein, wobei der Schwimmer 3 im Bereich dieser Trennschicht angeordnet ist. Wenn sich die Leichtflüssigkeit und die Schwerflüssigkeit schlecht vermischen, ist die Trennschicht dünn, beispielsweise als Trennfläche, ausgebildet.

Das Flüssigkeitsgemisch kann insbesondere Regenwasser, Brauchwasser, Abwasser, Grauwasser, Industriewasser, Kühlmittelflüssigkeit, Öl und dergleichen umfassen.

Der Leichtflüssigkeitsabscheider ist derart ausgelegt, dass das Flüssigkeitsgemisch - im Betrieb des Leichtflüssigkeitsabscheiders - bis zu einer Füllhöhe 8 des Leichtflüssigkeitsabscheiders angeordnet ist. Die Füllhöhe 8 wird im Betrieb des Leichtflüssigkeitsabscheiders im Wesentlichen konstant gehalten, beispielsweise mittels eines Sensors, welcher Sensor den Zulauf weiteren Flüssigkeitsgemischs steuert und gegebenenfalls unterbindet, oder mittels eines Überlaufs, welcher Überlauf ein Überlaufen, insbesondere ein Rücklaufen, des Flüssigkeitsgemischs bewirkt, sodass im Leichtflüssigkeitsabscheider die Oberfläche des Flüssigkeitsgemischs nicht über die Füllhöhe 8 hinaus ansteigt.

Im Betrieb bewirkt der Leichtflüssigkeitsabscheider ein Abtrennen der Leichtflüssigkeit von der Schwerflüssigkeit derart, dass die Schwerflüssigkeit abgeführt wird und die Leichtflüssigkeit sich im Leichtflüssigkeitsabscheider oberhalb der Schwerflüssigkeit sammelt. Bei konstanter Füllhöhe 8 des Flüssigkeitsgemisches wird dabei die Schichtstärke der Leichtflüssigkeit zusehends größer, womit der Schwimmer 3 zusehends absinkt. Sobald der Schwimmer 3 unterhalb einer Auslöselinie 9 abgesunken ist, wirkt der Schwimmer 3 auf die Auslösemechanik 4 derart, dass diese Auslösemechanik 4 von einer Arretierstellung 43 in eine Freigabestellung 42 verbracht wird, womit das Ventil 1 auslöst, also geschlossen wird, insbesondere schnell geschlossen wird, bevorzugt im Wesentlichen sofort geschlossen wird. Die Auslöselinie 9 ist angeordnet um den unerwünschten Austrag einer bereits im Leichtflüssigkeitsabscheider gespeicherten Leichtflüssigkeit zu verhindern

In der Arretierstellung 43 der Auslösemechanik 4 ist der Ventilteller 5 in dessen Offenstellung 51 arretiert, sodass das Ventil 1 offen ist und weiteres Flüssigkeitsgemisch zufließen kann. In der Freigabestellung 42 der Auslösemechanik 4 ist der Ventilteller 5 nicht arretiert, womit sich dieser, beispielsweise schwerkraftbedingt, in dessen Geschlossenstellung 52 bewegt. In der Geschlossenstellung 52 des Ventiltellers 5 ist das Ventil 1 geschlossen, sodass über den Zulauf 21 kein weiteres Flüssigkeitsgemisch in den Leichtflüssigkeitsabscheider einfüllbar ist. Sobald das Ventil 1 geschlossen ist, befindet sich der Leichtflüssigkeitsabscheider in einem Betriebszustand zum Entfernen der Leichtflüssigkeit. Hiebei ist die Schichtdicke der Leichtflüssigkeit im Leichtflüssigkeitsabscheider zu verringern, indem die Leichtflüssigkeit entfernt wird, insbesondere abgeschöpft wird. Beim Entfernen der Leichtflüssigkeit sinkt die Füllhöhe 8 des Flüssigkeitsgemisches. Zur Wiederinbetriebnahme des Leichtflüssigkeitsabscheiders kann vorgesehen sein, dass der Leichtflüssigkeitsabscheider bis zur Füllhöhe 8 mit Schwerflüssigkeit, insbesondere mit Wasser, beispielsweise mit Reinwasser, aufgefüllt werden kann. Dies bewirkt ein Anheben des Schwimmers 3 im Leichtflüssigkeitsabscheider, womit die Auslösemechanik 4 in die Arretierstellung 43 bewegt werden kann. In vorteilhafter Weise bewegt sich dabei die Auslösemechanik 4 nicht sofort in die Arretierstellung 43, sondern wird - bewirkt durch die Geschlossenstellung 52 des Ventiltellers 5 - weiterhin in der Freigabestellung 42 gehalten. Sobald dann der Ventilteller 5 in die Offenstellung 51 bewegt wird, bewegt sich die Auslösemechanik 4 in die Arretierstellung 43 und arretiert den Ventilteller 5 in dessen Offenstellung 51, sodass dann das Ventil 1 geöffnet und arretiert ist, womit weiters Flüssigkeitsgemisch zum Leichtflüssigkeitsabscheider zugeführt werden kann.

In vorteilhafter Weise kann vorgesehen sein, dass mit dem Ventilteller 5 eine Ausnehmung 53, insbesondere eine Nut, gekoppelt ist, dass die Auslösemechanik 4 ein Arretierungsmittel 41, insbesondere einen Bolzen, umfasst, dass in der arretierten Offenstellung 51 des Ventiltellers 5 das Arretierungsmittel 41 wenigstens bereichsweise in der Ausnehmung 53 angeordnet ist, und dass in einer Freigabestellung 42 der Auslösemechanik 4 das Arretierungsmittel 41 beabstandet zur Ausnehmung 53 angeordnet ist. Dies ermöglicht besonders zuverlässig das vorstehend beschriebene Auslösen des Ventils 1 und die Wiederherstellung der Arretierung des geöffneten Ventils 1.

In vorteilhafter Weiterbildung kann vorgesehen sein, dass die Auslösemechanik 4, insbesondere um eine erste Drehachse 44 des Ventilgehäuses 2, drehbar am Ventilgehäuse 2 gelagert ist. Die erste Drehachse 44 kann insbesondere im Bereich der Oberseite 24 des Ventilgehäuses 2, bevorzugt - in Betriebslage des Ventils 1 - oberhalb der des Ventilgehäuses 2, angeordnet sein. Insbesondere kann vorgesehen sein, dass das Arretierungsmittel 41 derart an der Auslösemechanik 4 angeordnet ist, dass das Arretierungsmittel 41 in die Ausnehmung 53 hineinschwenken und aus der Ausnehmung 53 herausschwenken kann, wozu das Arretierungsmittel 41 entlang einer Kreislinie um den Drehpunkt 44 des Ventilgehäuses 2 bewegbar ist, wie dies bei der bevorzugten ersten Ausführungsform des Ventils 1 vorgesehen ist.

In vorteilhafter Weiterbildung kann vorgesehen sein, dass der Schwimmer 3 an einem Schwimmergestänge 31 angeordnet ist, welches Schwimmergestänge 31 am Ventilgehäuse 2 gelagert ist. Die Lageänderung des Schwimmers 3 bewirkt dann eine Bewegung des Schwimmergestänges 31, wobei durch das Schwimmergestänge 31 das Zusammenwirken des Schwimmers 3 und der Auslösemechanik 4 gewährleistet ist.

In einer - nicht dargestellten - zweiten Ausführungsform des Ventils 1 kann das Schwimmergestänge 31 verschieblich, insbesondere im Wesentlichen vertikal verschieblich, gelagert sein, sodass sich das Schwimmergestänge 31 mit dem Schwimmer 3 mithebt bzw. mitsenkt, wenn der Schwimmer 3 seine Höhenlage ändert. Dabei wirkt die Verschiebung des Schwimmergestänges 31 in geeigneter Weise auf die Auslösemechanik 4 um die Freigabestellung 42 der Auslösemechanik 4 zu bewirken, wenn der Schwimmer 3 unterhalb der Auslöselinie 9 sinkt.

In vorteilhafter anderer Weiterbildung kann vorgesehen sein, dass das Schwimmergestänge 31, insbesondere um eine zweite Drehachse 33, drehbar am Ventilgehäuse 2 gelagert ist. Die Höhenlageänderung des Schwimmers 3 bewirkt dann ein Verdrehen des Schwimmergestänges 31 um die zweite Drehachse 33, wie dies bei der ersten Ausführungsform des Ventils 1 vorgesehen ist. Dabei wirkt die Verdrehung des Schwimmergestänges 31 in geeigneter Weise auf die Auslösemechanik 4, indem das Schwimmergestänge 31 derart verdreht wird, um die Freigabestellung 42 der Auslösemechanik 4 zu bewirken, wenn der Schwimmer 3 unterhalb der Auslöselinie 9 sinkt. Die zweite Drehachse 33 kann insbesondere im Bereich der Oberseite 24 des Ventilgehäuses 2 angeordnet sein.

Die erste Drehachse 44 und die zweite Drehachse 33 können insbesondere im Wesentlichen parallel zueinander angeordnet sein.

Die erste Drehachse 44 kann insbesondere im Wesentlichen horizontal angeordnet sein. Die zweite Drehachse 33 kann insbesondere im Wesentlichen horizontal angeordnet sein.

In Weiterbildung kann vorgesehen sein, dass das Schwimmergestänge 31 - in Betriebslage des Ventils 1 - im Bereich einer Oberseite 24 des Ventilgehäuses 2 am Ventilgehäuse 2 gelagert ist. Damit kann im Betrieb des Leichtflüssigkeitsabscheiders gewährleistet werden, dass das Flüssigkeitsgemisch beabstandet zum Bereich ist, in welchem das Schwimmergestänge 31 gelagert ist. Vorteilhaft dabei ist, dass dann günstige Lagermittel in diesem Bereich angeordnet werden können und keine Vorkehrungen zu treffen sind, diese Lagermittel von der Einwirkung des Flüssigkeitsgemischs zu schützen.

Insbesondere kann vorgesehen sein, dass das Schwimmergestänge 31 einen Kontaktbereich 32 zum Kontaktieren der Auslösemechanik 4 aufweist, um das Zusammenwirken von Schwimmer 3 und Auslösemechanik 4 besonders zuverlässig zu gewährleisten. Insbesondere kann vorgesehen sein, dass die Auslösemechanik 4 eine Kontaktstelle 45 zum Zusammenwirken mit dem Schwimmergestänge 31, insbesondere zum Zusammenwirken mit dem Kontaktbereich 32, aufweist, um das Zusammenwirken von Schwimmer 3 und Auslösemechanik 4 besonders zuverlässig zu gewährleisten.

Wie in Fig. 1 und Fig. 2 schematisch dargestellt kann vorgesehen sein, dass der Kontaktbereich 32 und die Kontaktstelle 45 einander nicht kontaktieren, wenn der Schwimmer 3 deutlich oberhalb der Auslöselinie 9 angeordnet ist. Wenn der Schwimmer 3 in Richtung der Auslöselinie 9 absinkt, dann kontaktieren der Kontaktbereich 32 und die Kontaktstelle 45 einander, wodurch die Auslösemechanik 4 um die erste Drehachse 44 verdreht wird, sodass das Arretierungsmittel 41 aus der Ausnehmung 53 herausbewegt wird und beabstandet zur Ausnehmung 53 angeordnet ist, wenn der Schwimmer 3 zum Auslösen des Ventils 1 unter die Auslöselinie 9 absinkt.

Insbesondere kann vorgesehen sein, dass der Ventilteller 5 an einer Führungseinrichtung 54, insbesondere einer Führungsstange, zur Führung des Ventiltellers 5 bei der Bewegung zwischen der Offenstellung 51 und der Geschlossenstellung 52 befestigt ist. Derart kann zuverlässig die Bewegung des Ventiltellers 5 von dessen Offenstellung 51 in dessen Geschlossenstellung 52 - und zurück - gewährleistet werden. Vorteilhaft dabei ist weiters, dass die Stellung der Führungseinrichtung 54 direkt, insbesondere von oben, sichtbar ist, womit rückgeschlossen werden kann, ob sich der Ventilteller 5 in dessen Offenstellung 51 oder in dessen Geschlossenstellung 52 befindet. Dies erleichtert das Erkennen des Betriebszustandes des Ventils 1, wozu die Führungseinrichtung 54 - in Betriebslage des Ventils 1 - wenigstens bereichsweise oberhalb des Ventilgehäuses 2 angeordnet sein kann.

In diesem Zusammenhang kann insbesondere vorgesehen sein, dass die Ausnehmung 53 an der Führungseinrichtung 54 ausgebildet ist, wie dies in der ersten Ausführungsform des Ventils 1 vorgesehen ist.

Insbesondere kann vorgesehen sein, dass die Führungseinrichtung 54 als Führungsstange ausgebildet ist, wie dies ebenfalls in der in der ersten Ausführungsform des Ventils 1 vorgesehen ist. Vorteilhaft dabei ist, dass der Ventilteller 5 transversal bewegt wird.

Insbesondere kann vorgesehen sein, dass die Führungsstange derart gelagert ist, dass der Ventilteller 5 im Wesentlichen vertikal zwischen der Offenstellung 51 und der Geschlossenstellung 52 hin- und herbewegt wird. Insbesondere kann die Führungsstange - in Betriebslage des Ventils 1 - wenigstens bereichsweise oberhalb des Ventilgehäuses 2 angeordnet sein.

Als vorteilhaft hat sich erwiesen, dass die Führungseinrichtung 54 an einem Zentralbereich 56 des Ventiltellers 5 befestigt ist, womit ein Verkanten des Ventiltellers 5, während dessen Bewegung von der Offenstellung 51 in die Geschlossenstellung 52 und zurück, zuverlässig verhindert werden kann.

In besonders vorteilhafter Weiterbildung kann vorgesehen sein, dass an einem oberen Ende der Führungseinrichtung 54 ein Griff 55 angeordnet ist, und dass der Griff 55 - in Betriebslage des Ventils 1 - oberhalb des Ventilgehäuses 2 angeordnet ist. Der Griff 55 ist vorgesehen um den Ventilteller 5 manuell zu bewegen, insbesondere von der Geschlossenstellung 52 in die Offenstellung 51. Vorteilhaft dabei ist, dass der Griff 55 von oben zugänglich ist und somit gewährleistet werden kann, dass der Griff 55 immer oberhalb der Füllhöhe 8 des Leichtflüssigkeitsabscheiders angeordnet ist. Dies gewährleistet, dass der Ventilteller 5 mittels des Griffs 55 manuell von der Geschlossenstellung 52 in die Offenstellung 51 bewegt werden kann, ohne dass dabei in das Flüssigkeitsgemisch eingegriffen werden muss. Auch anhand der Stellung des Griffs 55 kann auf die Stellung des Ventiltellers 5 rückgeschlossen werden, welches ebenfalls das Erkennen des Betriebszustandes, Offenstellung 51 oder Geschlossenstellung 52, des Ventils 1 erleichtert. Der Aufwand für Wartungsarbeiten kann besonders verringert werden, wenn das Ventilgehäuse 2 eine abnehmbare Verschlussplatte 25 umfasst, welche Verschlussplatte 25 - in Betriebslage des Ventils 1 - im Bereich einer Oberseite 24 am Ventilgehäuse 2 montiert ist. Vorteilhaft dabei ist, dass die Verschlussplatte 25 gut zugänglich ist, womit das Öffnen des Ventilgehäuses 2 einfach erfolgen kann.

Insbesondere kann die Verschlussplatte 25 mittel einer Schraubverbindungen 26 in Betriebslage gehalten werden. Zum Abnehmen der Verschlussplatte 25 werden die Schraubverbindungen 26 gelöst.

In diesem Zusammenhang kann vorgesehen sein, dass die Auslösemechanik 4 und der Ventilteller 5 an der, insbesondere auf der, Verschlussplatte 25 gelagert sind. In vorteilhafter Weise können dann die Auslösemechanik 4 und der Ventilteller 5 mit dem Abnehmen der Verschlussplatte 25 aus dem Ventil 1 entfernt werden, womit hier eine kompakte Einheit vorliegt und womit die Wartung dieser Bauteile besonders einfach und entfernt vom Leichtflüssigkeitsabscheider, beispielsweise in einer Werkstatt, erfolgen kann.

In einer vorteilhaften dritten Ausführungsform des Ventils 1 kann vorgesehen sein, dass der Schwimmer 3, insbesondere das Schwimmergestänge 31 an der, insbesondere auf der, Verschlussplatte 25 gelagert ist. In vorteilhafter Weise kann damit der Schwimmer 3 gemeinsam mit der Verschlussplatte 25 vom Ventil 1 abgenommen und vom Ventil 1 entfernt werden.

In einer vorteilhaften vierten Ausführungsform des Ventils 1 kann vorgesehen sein, dass der Schwimmer 3, insbesondere das Schwimmergestänge 31, die Auslösemechanik 4 und der Ventilteller 5 an der, insbesondere auf der, Verschlussplatte 25 gelagert sind. In vorteilhafter Weise sind dabei im Wesentlichen sämtliche gelagerten Bauteile an der Verschlussplatte 25 gelagert, womit hier eine besonders kompakte Einheit vorliegt, sodass zur Wartung der Lager bzw. der gelagerten Bauteile lediglich die Verschlussplatte 25 abzunehmen ist und entfernt vom Ventil 1, beispielsweise in einer Werkstätte, einfach und zuverlässig gewartet werden kann.

Insbesondere kann der Ventilteller 5 Dichtungen umfassen, welche bei der Wartung geprüft und gegebenenfalls erneuert werden können.

In vorteilhafter Weise kann vorgesehen sein, dass das Ventil 1 derart im Leichtflüssigkeitsabscheider angeordnet ist, dass der Auslauf 23 zwischen der Füllhöhe 8 des Leichtflüssigkeitsabscheiders und der Auslöselinie 9 des Leichtflüssigkeitsabscheiders befindet, womit gewährleistet sein kann, dass der Auslauf 23 des Ventils 1 - im Betrieb des Leichtflüssigkeitsabscheiders - üblicherweise in der oberen, die Leichtflüssigkeit umfassenden, Flüssigkeitsschichte angeordnet ist, wozu vorgesehen sein kann, dass der Auslauf 23 des Ventils 1 zur Anordnung in der oberen Schichte des Flüssigkeitsgemisches vorgesehen ist. Vorteilhaft dabei ist, dass, wenn Flüssigkeitsgemisch zuläuft, das im Leichtflüssigkeitsabscheider befindliche Flüssigkeitsgemisch möglichst gering durchmischt wird, womit die gute Trennung der übereinanderliegenden Schichten unterschiedlicher Dichte des im Leichtflüssigkeitsabscheider befindlichen Flüssigkeitsgemischs gewährleistet sein kann.

An den Zulauf 21 des Ventils 1 kann insbesondere ein Zulaufrohr 6 angeschlossen sein. Das Zulaufrohr 6 kann insbesondere in eine Seitenwand 7 des Leichtflüssigkeitsabscheiders durchragen.

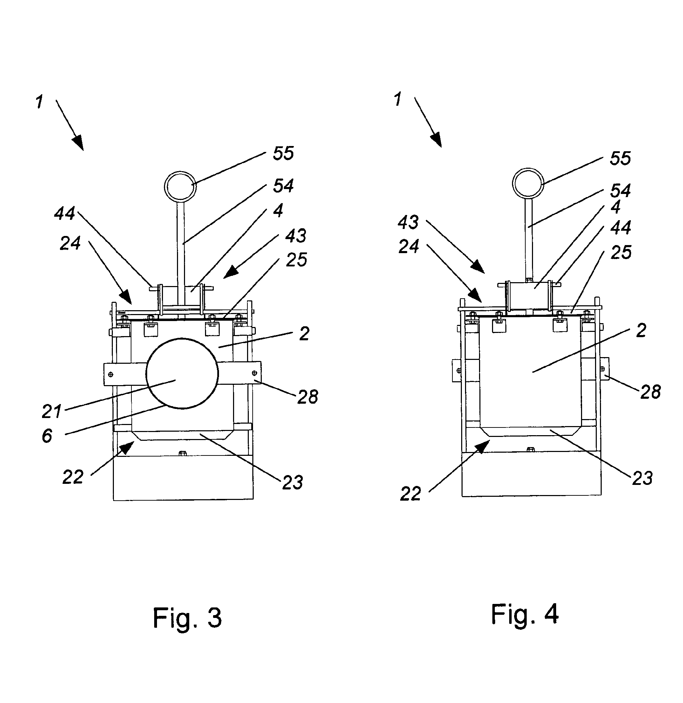

In Fig. 3 und 4 ist weiters ein Halterahmen 28 des Ventilgehäuses 2 dargestellt. Mittels des Halterahmens 28 kann das Ventilgehäuse 2 besonders einfach in der Betriebslage im Leichtflüssigkeitsabscheider gehalten werden.

Die Auslösemechanik 4 kann weiters einen zweiten Schwimmer 46 umfassen, welcher vorgesehen ist, das Ventil 1 auszulösen, wenn die Füllhöhe 8 des Leichtflüssigkeitsabscheiders - beispielsweise aufgrund einer Fehlfunktion - deutlich überschritten wird und dadurch der zweite Schwimmer 46 auf der Oberfläche des Flüssigkeitsgemischs aufschwimmt. Hiebei wirkt der zweite Schwimmer 46 als zusätzliche Sicherheit. Der zweite Schwimmer 46 kann insbesondere eine geringere Dichte als die Leichtflüssigkeit aufweisen.

Die Führungseinrichtung 54 kann insbesondere mittels Verschraubung mit dem Ventilteller 5 verbunden sein. In anderer Ausführung dieser Verbindung können die Führungseinrichtung 54 und der Ventilteller 5 miteinander vernietet und/oder miteinander verschweißt sein.

In vorteilhafter Weise kann vorgesehen sein, dass das Ventilgehäuse 2 - in der Sicht von oben - viereckig, insbesondere rechteckig, ausgebildet ist. In diesem Zusammenhang kann vorgesehen sein, dass der Ventilteller 5 - in der Sicht von oben - viereckig, insbesondere rechteckig, ausgebildet ist. Vorteilhaft dabei ist, dass das Ventilgehäuse 2 besonders günstig in der Herstellung ist und einen hohen Durchsatz bei einer geringen Durchflussgeschwindigkeit aufweist, womit das Flüssigkeitsgemisch im Leichtflüssigkeitsabscheider beim Zufließen neuen Flüssigkeitsgemischs möglichst wenig aufgewirbelt wird. In anderer Ausgestaltung der Form des Ventilgehäuses 2 kann dieses - in der Sicht von oben - rund oder oval ausgebildet sein.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Schwimmergesteuertes Ventil (1) für Leichtflüssigkeitsabscheider, wobei das Ventil (1) ein Ventilgehäuse (2) mit einem Zulauf (21) und einem - in Betriebslage des Ventils (1) - im Bereich einer Unterseite (22) des Ventilgehäuses (2) angeordneten Auslauf (23) aufweist, wobei ein Schwimmer (3) über eine Auslösemechanik (4) mit einem Ventilteller (5) zusammenwirkt, wobei bei einer vorgebbaren Stellung des Schwimmers (3) die Auslösemechanik (4) den in einer, einen Flüssigkeitsaustritt aus dem Auslauf (23) ermöglichenden, Offenstellung (51) arretierten Ventilteller (5) zur Bewegung in eine, einen Flüssigkeitsaustritt aus dem Auslauf (23) verhindernde, Geschlossenstellung (52) des Ventiltellers (5) freigibt, **dadurch gekennzeichnet, dass** die Auslösemechanik (4) - in Betriebslage des Ventils (1) - im Bereich einer Oberseite (24) des Ventilgehäuses (2) angeordnet ist.

2. Schwimmergesteuertes Ventil nach Anspruch 1, **dadurch gekennzeichnet, dass** mit dem Ventilteller (5) eine Ausnehmung (53), insbesondere eine Nut, gekoppelt ist, dass die Auslösemechanik (4) ein Arretierungsmittel (41), insbesondere einen Bolzen, umfasst, dass in der arretierten Offenstellung (51) des Ventiltellers (5) das Arretierungsmittel (41) wenigstens bereichsweise in der Ausnehmung (53) angeordnet ist, und dass in einer Freigabestellung (42) der Auslösemechanik (4) das Arretierungsmittel (41) beabstandet zur Ausnehmung (53) angeordnet ist.

3. Schwimmergesteuertes Ventil nach einem der Ansprüche 1 bis 2, **dadurch gekennzeichnet, dass** der Schwimmer (3) an einem Schwimmergestänge (31) angeordnet ist, welches Schwimmergestänge (31) am Ventilgehäuse (2) gelagert, insbesondere drehbar gelagert, ist.

4. Schwimmergesteuertes Ventil nach Anspruch 3, **dadurch gekennzeichnet, dass** das Schwimmergestänge (31) einen Kontaktbereich (32) zum Kontaktieren der Auslösemechanik (4) aufweist.

5. Schwimmergesteuertes Ventil nach Anspruch 3 oder 4, **dadurch gekennzeichnet, dass** das Schwimmergestänge (31) - in Betriebslage des Ventils (1) - im Bereich der Oberseite (24) am Ventilgehäuse (2) gelagert ist.

6. Schwimmergesteuertes Ventil nach einem der Ansprüche 1 bis 5, **dadurch gekennzeichnet, dass** die Auslösemechanik (4) - in Betriebslage des Ventils (1) - im Bereich der Oberseite (24) des Ventilgehäuses (2) am Ventilgehäuse (2) gelagert ist.

7. Schwimmergesteuertes Ventil nach einem der Ansprüche 1 bis 6, **dadurch gekennzeichnet, dass** der Ventilteller (5) an einer Führungseinrichtung (54), insbesondere einer Führungsstange, zur Führung des Ventiltellers (5) bei der Bewegung zwischen der Offenstellung (51) und der Geschlossenstellung (52) befestigt ist.

8. Schwimmergesteuertes Ventil nach Anspruch 7, **dadurch gekennzeichnet, dass** die Ausnehmung (53) an der Führungseinrichtung (54) ausgebildet ist.

9. Schwimmergesteuertes Ventil nach Anspruch 7 oder 8, **dadurch gekennzeichnet, dass** an einem oberen Ende der Führungseinrichtung (54) ein Griff (55) angeordnet ist, und dass der Griff (55) - in Betriebslage des Ventils (1) - oberhalb des Ventilgehäuses (2) angeordnet ist.

10. Schwimmergesteuertes Ventil nach Anspruch 7, 8 oder 9, **dadurch gekennzeichnet, dass** die Führungseinrichtung (54) an einem Zentralbereich (56) des Ventiltellers (5) befestigt ist.

11. Schwimmergesteuertes Ventil nach einem der Ansprüche 1 bis 10, **dadurch gekennzeichnet, dass** das Ventilgehäuse (2) eine abnehmbare Verschlussplatte (25) umfasst, welche Verschlussplatte (25) - in Betriebslage des Ventils (1) - im Bereich einer Oberseite (24) am Ventilgehäuse (2) montiert ist.

12. Schwimmergesteuertes Ventil nach Anspruch 11, **dadurch gekennzeichnet, dass** die Auslösemechanik (4) und der Ventilteller (5) an der Verschlussplatte (25) gelagert sind.

13. Schwimmergesteuertes Ventil nach Anspruch 11 oder 12, **dadurch gekennzeichnet, dass** der Schwimmer (3). insbesondere das Schwimmergestänge (31) an der Verschlussplatte (25) gelagert ist.

14. Leichtflüssigkeitsabscheider mit einem schwimmergesteuerten Ventil (1) nach einem der Ansprüche 1 bis 13.

15. Leichtflüssigkeitsabscheider nach Anspruch 14, **dadurch gekennzeichnet, dass** die Auslösemechanik (4) oberhalb der Füllhöhe (8) des Leichtflüssigkeitsabscheiders angeordnet ist.
